(19) Europäisches Patentamt
European Patent Office
Office européen des brevets

(11) Numéro de publication : **0 541 673 B1**

## (12) FASCICULE DE BREVET EUROPEEN

(45) Date de publication du fascicule du brevet :
26.10.94 Bulletin 94/43

(51) Int. Cl.$^5$ : **G06F 15/02**, A63B 71/06

(21) Numéro de dépôt : **91914424.6**

(22) Date de dépôt : **26.07.91**

(86) Numéro de dépôt international :
**PCT/FR91/00622**

(87) Numéro de publication internationale :
**WO 92/02881 20.02.92 Gazette 92/05**

(54) **DISPOSITIF D'ENREGISTREMENT DE PHASES DE SPORT, ET NOTAMMENT D'ECHANGES DE TENNIS.**

(30) Priorité : **03.08.90 FR 9010173**
**29.05.91 FR 9106627**

(43) Date de publication de la demande :
**19.05.93 Bulletin 93/20**

(45) Mention de la délivrance du brevet :
**26.10.94 Bulletin 94/43**

(84) Etats contractants désignés :
**AT BE CH DE ES FR GB IT LI NL SE**

(56) Documents cités :
**BE-A- 905 686**
**US-A- 4 879 651**

(73) Titulaire : **LANE, Thao**
**9, Impasse Léon-Harmel**
**F-35000 Rennes (FR)**
Titulaire : **SAPENE, Bruno**
**rue du Professeur-Maurice-Audin**
**F-35000 Rennes (FR)**

(72) Inventeur : **LANE, Thao**
**9, Impasse Léon-Harmel**
**F-35000 Rennes (FR)**
Inventeur : **SAPENE, Bruno**
**rue du Professeur-Maurice-Audin**
**F-35000 Rennes (FR)**

(74) Mandataire : **Vidon, Patrice**
**Cabinet Patrice Vidon**
**Immeuble Germanium**
**80, Avenue des Buttes de Coesmes**
**F-35700 Rennes (FR)**

## Description

Le domaine de l'invention est celui du suivi technique de sportifs. Plus précisément, l'invention concerne l'enregistrement de phases de jeu, en match ou à l'entrainement, de façon à en permettre l'analyse.

L'invention s'applique notamment au tennis. Toutefois, de nombreuses applications similaires sont envisageables dans d'autres sports tels que, par exemple, le volley-ball, le tennis de table, le squash, le golf, etc... Plus généralement, l'invention peut avantageusement s'appliquer à tout sport susceptible d'être décomposé en actions, gestes, mouvements,... liés à des positions de joueurs sur un terrain, et/ou à des impacts ou des résultats en des emplacements donnés.

A tous les niveaux, du débutant à l'entrainement jusqu'au sportif de haut niveau en compétition, un suivi régulier est nécessaire pour que le joueur puisse progresser. Le moniteur, l'entraîneur, ou les partenaires actifs du joueur (parents, club, amis,...), doivent donc prendre des notes sur le déroulement du jeu, et par exemple, au tennis, sur le type et le succès des échanges de balles. Cela permet de repérer les défauts ou les faiblesses d'un joueur, et de le conseiller en conséquence. Pour cela, les entraîneurs utilisent généralement des fiches papier spéciales, sur lesquelles ils effectuent un pointage.

Une autre solution couramment utilisée est l'enregistrement vidéo, qui permet de visualiser à nouveau les échanges.

Dans tous les cas, une analyse a posteriori est nécessaire, et le diagnostic est obtenu en temps différé. Lorsque l'on effectue un pointage sur papier, l'analyse consiste en une comptabilisation des différentes informations, de façon à établir des statistiques. De même, l'enregistrement vidéo ne permet pas d'obtenir directement des statistiques : il est nécessaire de noter, soit manuellement, soit sur informatique, les informations utiles.

Ainsi, l'entraîneur ne peut jamais connaître en temps réel, de façon précise et très complète les données statistiques concernant un joueur.

Par ailleurs, il apparaît clairement que les systèmes existants sont complexes, ou nécessitent un apprentissage important. De plus, ils ne sont pas autonomes, et ne délivrent pas directement d'informations statistiques.

On connaît également, par le document de brevet US-4,879,651, un dispositif permettant l'enregistrement de données concernant un match de tennis. Ce dispositif présente cependant plusieurs inconvénients et limites. En effet, il ne permet l'enregistrement, et donc la prise en compte, que du dernier coup ayant entraîné le gain ou la perte du point. Pourtant, le plus souvent, le gain d'un point dépend de plusieurs coups précédents, joués par le joueur et son adversaire. La qualité des statistiques effectuées par cet appareil est donc très limitée. De plus, cet appareil ne prend en compte qu'un seul joueur, et s'avère difficile à utiliser, sur le plan ergonomique.

L'invention a notamment pour objectif de pallier ces limites et inconvénients de l'art antérieur.

Plus précisément, un objectif de l'invention est de fournir un dispositif permettant l'enregistrement de phases de sport, et notamment d'échanges de tennis, de façon à en permettre l'analyse.

Un autre objectif essentiel de l'invention est de fournir un tel dispositif, à l'aide duquel l'enregistrement des phases de sport puisse se faire de façon aisée, sans nécessiter d'apprentissage ou d'efforts de mémorisation du fonctionnement du dispositif.

Un autre objectif de l'invention est encore de fournir un tel dispositif, produisant en temps réel des informations statistiques sur le jeu et son évolution, en fonction des demandes et des besoins de l'utilisateur.

L'invention a également pour objectif de fournir un tel dispositif, qui soit autonome et portable, de façon à ce que son utilisation soit possible sur tous les terrains de sport.

Ces objectifs, ainsi que d'autres qui apparaîtront par la suite, sont atteints selon l'invention à l'aide d'un dispositif d'enregistrement de phases de jeu sportif constituées d'actions successives menées sur un espace de jeu, comprenant un clavier tactile représentatif dudit espace de jeu, muni de touches définissant des actions de jeu, au moins certaines desdites touches étant localisées dans les zones dudit espace de jeu où ces actions de jeu sont susceptibles d'intervenir, de façon à permettre l'enregistrement de la représentation codée d'une phase de jeu en pressant la touche ou la séquence de touches correspondant aux actions caractéristiques de ladite phase de jeu, dans la ou les zones dudit espace de jeu où chacune desdites actions est intervenue.

La caractéristique essentielle de l'invention est donc de lier la position des touches du clavier à des emplacements géographiques particuliers d'un espace de jeu, et notamment d'un terrain de sport.

Il y a ainsi interaction complète entre l'action telle qu'elle se déroule réellement et la façon dont elle est entrée dans le dispositif de l'invention. L'apprentissage et l'effort de mémorisation nécessaires à l'utilisation du dispositif sont donc très limités. Au contraire, l'usage du dispositif est attractif, voire ludique.

L'invention est notamment destinée au suivi technique de joueurs de tennis. Dans ce cas, ledit clavier tactile représente un terrain de tennis, et lesdites phases de jeu sont des échanges de balles, et notamment les phases finales de chaque échange.

Il est clair toutefois que l'invention peut s'appliquer également à de nombreux autres sports se pratiquant sur un terrain de sport, et plus généralement à des sports tels que le golf, les sports de combat, etc...

Dans un mode de réalisation particulier de l'invention, il est possible que ledit clavier tactile représente une portion dudit espace de jeu, et notamment un quart ou une moitié dudit espace de jeu, en exploitant les symétries du terrain. On peut ainsi limiter le nombre de touches nécessaires.

Avantageusement, lorsque cela est possible, lesdites touches localisées dans des zones dudit espace de jeu sont distribuées symétriquement sur ledit clavier tactile, en fonction d'au moins un axe de symétrie dudit espace de jeu. L'utilisation du clavier est ainsi encore facilitée.

De façon préférentielle, notamment dans le cas du tennis et des sports proches (par leurs terrains et/ou leurs règles), lesdites touches comprennent des touches d'actions de jeu, correspondant chacune à un type de coup, ou de geste, dudit sport, effectué dans une desdites zones dudit espace de jeu, et des bornes d'indication d'un point gagnant ou perdant correspondant à un impact dans une desdites zones dudit espace de jeu.

Deux notions peuvent ainsi être enregistrées : les points marqués, ou les impacts de coups dans ou hors d'une zone de validité, d'une part, et le type des coups d'autre part.

Dans un mode de réalisation avantageux, le dispositif de l'invention comprend, en marge de la représentation dudit espace de jeu, au moins une des touches appartenant au groupe comprenant :
- touches de validation, d'effacement, de correction ;
- touches de commentaire et/ou d'observation sur lesdites phases de jeu et/ou les joueurs ;
- touches d'initialisation et d'entrée de données de base d'une partie ;
- touches alpha-numériques.

Préférentiellement, le dispositif comprend des moyens de traitement desdites représentations codées desdites phases de jeu, de façon à déterminer le score de la partie et/ou des informations statistiques sur le déroulement de ladite partie.

Ainsi, les données enregistrées peuvent être directemement exploitées par le dispositif, sans aucun appareil extérieur. Des analyses statistiques peuvent être produites à tout moment, en cours de jeu. L'entraineur peut alors conseiller le joueur directement, sans temps d'attente. L'invention permet également avantageusement de gérer le score d'une partie, en fonction des données enregistrées.

De façon avantageuse, le dispositif comprend des moyens d'affichage dudit score et/ou desdites informations statistiques. Ainsi, le dispositif de l'invention est complètement autonome. On peut également prévoir la connexion du dispositif à des moyens de visualisation complémentaire, tel qu'un Minitel (marque déposée) par exemple.

De même, ce dispositif peut comprendre des moyens de connexion à l'un au moins des dispositifs appartenant au groupe comprenant :
- une imprimante ;
- des moyens de stockage des données ;
- des moyens de traitement des données ;
- des moyens de restitution des données;
- une base de données.

L'invention concerne également toute base de données élaborée à partir des données produites par un tel dispositif, de même que toute utilisation d'une telle base de données dans tout appareil de stockage, de traitement, de restitution et/ou d'assistance didactique aux joueurs.

Ainsi, par exemple, on peut connecter le dispositif de l'invention à un disque optique numérique interactif. Dans ce cas, les résultats statistiques permettent de sélectionner des conseils spécifiques sur le disque.

D'autres caractéristiques et avantages de l'invention apparaîtront à la lecture de la description suivante d'un mode de réalisation préférentiel de l'invention, donné à titre illustratif et non limitatif, et des dessins annexés, dans lesquels :
- la figure 1 est une vue de dessus d'un mode de réalisation du dispositif de l'invention, destiné au tennis ;
- la figure 2 est un schéma synoptique du circuit électronique équipant le dispositif de la figure 1 ;
- la figure 3 présente l'organigramme simplifié de la phase d'initialisation d'un enregistrement.

Le mode de réalisation décrit ci-dessous a trait plus particulièrement au tennis. Il est clair toutefois que l'invention peut être aisément adapté à de nombreux autres sports, en prenant en compte les particularités de ces sports (types de coups, de points gagnants/perdants,...).

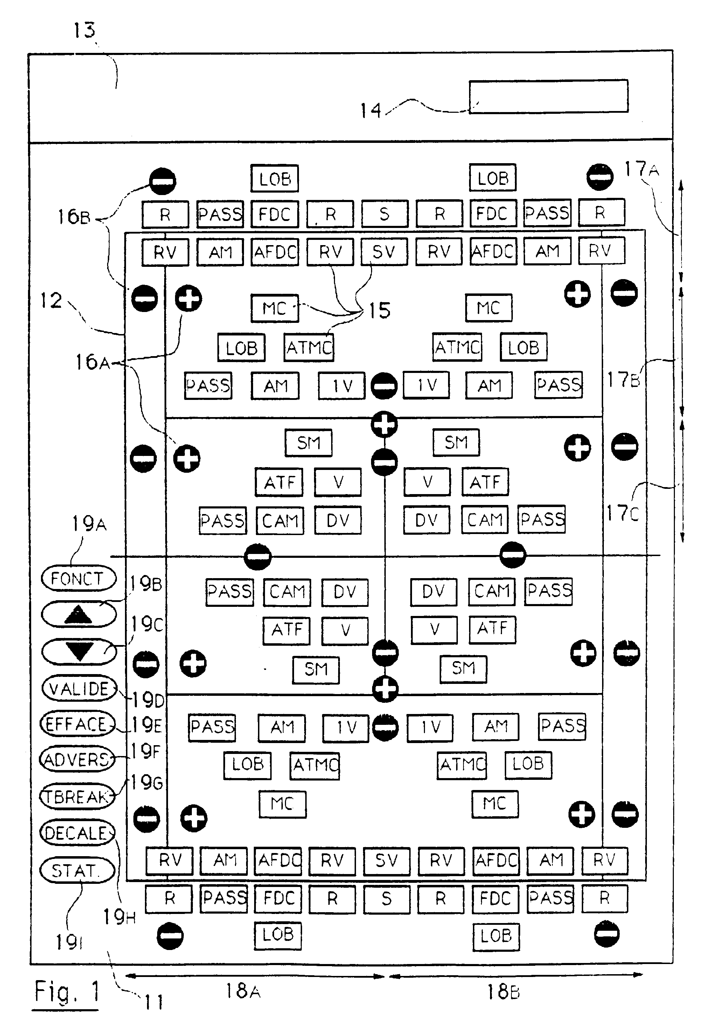

La figure 1 représente une vue de dessus du dispositif de l'invention. Il comprend une partie plane portant un clavier tactile 11, sur laquelle sont représentés les contours 12 caractéristiques d'un terrain de tennis (limites du terrain, carrés de service, couloirs et filet), et une partie supérieure 13, comprenant des moyens de traitement et un afficheur 14.

Pour la plupart des sports, on peut ainsi représenter à plat l'aire de jeu, à l'aide des contours essentiels (volley-ball, basket-ball,...). Toutefois, dans d'autres cas, on peut également prévoir de faire apparaître la notion de hauteur. C'est notamment le cas du squash, ou d'autres sports utilisant les murs du terrain. La partie plane pourra alors présenter, mis à plat, le sol, le mur du fond et les murs latéraux.

Plus généralement, le clavier selon l'invention peut représenter un volume de jeu ou d'action. Ainsi, par exemple, pour différents sports de combat, le clavier peut représenter l'effigie d'un ou plusieurs combattants. Les touches permettent alors d'enregistrer les zones d'impact des coups, et éventuellement le type des coups.

Dans le cas du golf, l'écran tactile peut par exemple représenter chaque trou d'un parcours, avec ses difficultés. Le dispositif de l'invention permettra alors notamment d'enregistrer la longueur des coups et l'impact (précision, distance, déviation par rapport à l'objectif), de calculer le score (par exemple par rapport au "par" du trou considéré) et d'en tirer les conclusions pour conseiller le joueur. On pourra avantageusement tenir compte du sexe et de l'âge du joueur, et du club utilisé.

Dans la suite de la présente description, bien que l'on décrive essentiellement un "clavier-terrain" pour le tennis, il est clair que les différentes caractéristiques peuvent être adaptées à tous ces sports, et à bien d'autres.

Selon la caractéristique essentielle de l'invention, des touches 15, $16_A$, $16_B$ sont donc réparties sur toute la surface du terrain représenté. Ces touches correspondent d'une part à des types de coups 15 (volée, smash, revers,...), et d'autre part à la réussite du coup $16_A$, $16_B$ (point perdant, point gagnant). Les touches sont placées aux endroits où ces coups sont susceptibles d'être effectués.

La distribution de ces touches permet ainsi de retracer aisément un échange, ou au moins sa phase finale (par exemple les deux ou trois dernières frappes de balle). En effet, l'utilisateur reproduit sur le clavier-terrain, du doigt ou à l'aide d'un objet quelconque tel qu'un crayon, l'échange qu'il vient de suivre. Aucun effort particulier d'apprentissage du dispositif ou de mémorisation de séquences de touches spécifiques n'est nécessaire. Le dispositif de l'invention fait simplement appel à la mémoire visuelle et à la reproduction directe de l'échange suivi.

Sur chaque demi-terrain, trois espaces ont été définis : fond de court $17_A$, mi-court $17_B$, et filet $17_C$. Chacun de ces espaces a ensuite été découpé symétriquement en deux zones gauche $18_A$ et droite $18_B$. Ainsi, six zones d'impact sont distinguées par demi-terrain.

Bien sûr, tout autre répartition géographique peut être retenue, sans sortir du cadre de l'invention.

De façon à faciliter encore l'usage du dispositif, plusieurs solutions sont également avantageusement retenues :
- symétrisation de la répartition des touches, selon les deux axes de symétrie du terrain ;
- distinction de deux types de touches, par exemple par leurs formes et/ou par leurs couleurs :
  - touches d'actions 15(par exemple rectangulaires) ;
  - touches, ou bornes, d'impact $16_A$, $16_B$ (par exemple circulaires) ;
- utilisation de symboles simples, pour les touches d'impact $16_A$, $16_B$, tels que $\oplus$ : point gagnant $16_A$ et $\ominus$ : point perdant $16_B$ ;
- regroupement par couleur des touches d'une même famille, ("smash", lob, amorti,...) et/ou de même nature (coup d'attaque, coup d'attente, coup de défense).

De nombreuses variantes peuvent également être envisagées. On peut par exemple prévoir que seules les touches d'actions soient réparties sur le terrain, et que deux bornes d'impact uniques soient placées hors du terrain. Inversement, on peut distribuer un grand nombre de bornes d'impact sur la surface du terrain, et préciser le type d'action à l'aide d'une série de touches complémentaires, en bordure du terrain.

D'autres représentations peuvent par ailleurs être utilisées. En exploitant les symétries d'un terrain de sport, que l'on retrouve dans la répartition des touches sur le dispositif de la figure 1. Il est ainsi possible de ne représenter qu'un quart, ou qu'une moitié, du terrain. Dans ce cas, on peut prévoir des touches spéciales permettant de préciser la portion de terrain considérée.

Le type et le nombre de touches du dispositif de la figure 1 reposent sur une analyse assez fine des gestes du tennis. Il s'adresse donc surtout à l'entrainement ou au suivi du joueur expérimenté. La table I suivante précise la définition de ces touches 15, en considérant le quart nord-ouest du terrain 12 de la figure 1.

## TABLE I

| TOUCHE | DESCRIPTIF |
|---|---|
| **Fond de court** | |
| LOB | - coup joué en lob du fond du court, la balle passant au-dessus de l'adversaire |
| R | - retour de service en position croisée |
| PASS | - "passing shot", du fond du court, la balle contournant l'adversaire au filet |
| FDC | - fond de court : coup droit ou revers du fond du court (sans intention agressive) |
| R | - retour de service du centre du court |
| S | - service (première ou seconde balle, à droite ou à gauche : le décompte est géré par le dispositif) |
| RV | - retour-volée : retour de service suivi au filet, pour le relanceur, en position croisée |
| AM | - amorti du fond du court |
| ATFDC | - attaque de fond de court (avec intention agressive) |
| RV | - retour-volée : retour suivi au filet, du centre de court |
| SV | - service-volée : service suivi au filet |
| **Mi-court** | |
| MC | - mi-court : coup joué à mi-court sans prise de risque |
| LOB | - lob effectué à mi-court |
| ATMC | - attaque à mi-court (avec intention agressive) |
| PASS | - "passing-shot" à mi-court, la balle contournant l'adversaire au filet |
| AM | - amorti joué à mi-court |
| 1V | - première volée, pour un joueur partant du fond du court et montant au filet |
| **Filet** | |
| SM | - "smash", balle jouée avec un mouvement proche de celui du service en cours de jeu |
| ATF | - attaque jouée entre filet et mi-court |
| V | - volée, autre que la première volée (1V) |
| PASS | - "passing-shot" au filet, la balle contournant l'adversaire au filet |
| CAM | - contre-amortie, balle amortie en réponse à une première amortie de l'adversaire |
| DV | - demie-volée : balle frappée juste après son rebond |

Il est à noter que le même type de touche peut apparaître plusieurs fois, dans différents espaces du terrain. En effet, l'invention est basée sur la distribution géographique des touches sur le terrain. Cela permet par exemple de distinguer les balles amorties réalisées du fond du court de celles effectuées à mi-court.

De même, 18 bornes 16$_B$ $\ominus$ et 10 bornes 16$_A$ $\oplus$ sont réparties sur l'ensemble du terrain, permettant une bonne précision sur la connaissance des emplacements des coups gagnants ou perdants. Ainsi, si l'on consi-

dère l'un des coins du terrain, il est possible de préciser si une balle était faute en largeur ou en longueur.

Des versions simplifiées de ce dispositif peuvent aisément être réalisées, par exemple en limitant le nombre de gestes distingués (en les regroupant par espace, par nature et/ou par famille).

Par ailleurs, il est possible d'adapter ces touches en fonction de l'utilisation du dispositif. En effet, outre l'entrainement, un tel dispositif présente également des intérêts dans des domaines connexes, tels que le conseil pour le choix d'une raquette, ou d'une tension de cordage. Dans ces cas, la distribution, le nombre et le type des touches pourront être sensiblement différents.

Outre les touches réparties sur la surface du terrain, le dispositif comporte avantageusement une ou plusieurs séries de touches annexes $19_I$.

Ces touches permettent notamment l'entrée des données de base caractéristiques d'un match ou d'un entrainement, telles que :

- date et/ou heure ;
- nom du joueur et/ou de l'adversaire ;
- classement des joueurs ;
- force des joueurs ;
- type de joueurs (gaucher/droitier) ;
- âge des joueurs ;
- type de surface (lente/rapide) ;
- nombre de sets gagnants ;
- etc...

Elles sont également utilisées pour valider ($19_D$), corriger ou annuler ($19_E$) l'entrée d'une donnée ou d'une séquence d'échanges.

Une touche $19_G$ permet également l'indication de passage à un jeu décisif (ou "tie-break"), s'il y a lieu.

D'autres touches peuvent encore permettre de préciser, ou de nuancer, les données sur une séquence d'échanges. Il peut par exemple s'agir d' :

- informations sur le type de l'action (coup décalé, effet, hauteur...);
- informations sur la force du coup ;
- informations sur la qualité du coup ;
- informations sur le joueur (placement, concentration,...).

Plus généralement, des touches peuvent permettre l'enregistrement de données indépendamment de chaque échange, en cours de match, telles que :

- observations physiques (vitesse, force, fraîcheur, blessures,...) ;
- observations physiologiques (endurance, résistance,...) ;
- observations psychologiques (concentration, calme, combativité, créativité,...) ;
- observations techniques ;
- observations tactiques ;
- etc...

Pour limiter la complexité du dispositif, on peut prévoir un nombre réduit de touches (entre 5 et 10, par exemple), dont la fonction est choisie par l'utilisateur, selon ses besoins. Ces besoins s'avèrent en effet assez différents, suivant que le dispositif est utilisé par un débutant ou par un champion, à l'entraînement ou en match, ou encore pour le choix d'une raquette ou d'une tension de cordage, ...

Un clavier alphanumérique peut également être ajouté, permettant notamment l'entrée des noms des joueurs et des différentes données mentionnées ci-dessus.

La table II suivante résume, à titre indicatif, le rôle des touches annexes du dispositif représenté en figure 1.

## TABLE II

| N° | TOUCHES | DESCRIPTIF |
|----|---------|------------|
| 19$_A$ | FONCT. | - (fonction) sélection des paramètres d'un match (passage au paramètre suivant) |
| 19$_B$ | ▲ (flèche vers le haut) | - incrémentation des valeurs du paramètre en cours (nombre dans le cas d'un âge, lettre dans le cas d'un nom,...) |
| 19$_C$ | ▼ (flèche vers le bas) | - décrémentation des valeurs du paramètre en cours |
| 19$_D$ | VALIDE | - validation du choix d'une valeur d'un paramètre |
| 19$_E$ | EFFACE | - effacement de l'opération de saisie en cours (valeur de paramètre ou action en jeu) |
| 19$_F$ | ADVERS | - (adversaire) indication, en début de match, que c'est l'adversaire qui sert en premier, et demande, en combinaison avec la touche STAT. de statistiques sur l'adversaire |
| 19$_G$ | TBREAK | - ("tie-break") indication qu'un jeu décisif va être disputé |
| 19$_H$ | DECALE | - touche pressée avec une touche d'action, pour indiquer que le coup est joué par le joueur en décalage (le joueur "tourne" son revers) |
| 19$_I$ | STAT. | - demande de statistiques sur le match |

Toutes les données, et notamment les phases finales des échanges, sont enregistrées dans une mémoire, sous forme codée. Il est ainsi possible de les traiter, notamment en vu d'obtenir des informations statistiques précises, par exemple sur les points gagnants (service gagnant ("ace"), "smash" (coup frappé au-dessus de la tête), lob, "passing shot" (coup contournant l'adversaire au filet), amorti, revers, coup droit, effet et autres) et les points perdants (double faute, filet, faute directe, faute indirecte et autres) du joueur et de son adversaire.

Des informations encore plus précises peuvent également être obtenues, telles que l'évolution de la qualité des coups d'un joueur en cours de match, ou sur plusieurs matches, ou l'influence d'un changement de technique, de tactique, de raquette, ou d'une tension de cordage,...

Les statistiques peuvent plus globalement être effectuées en regroupant les coups par espaces géographiques (d'origine et/ou d'arrivée), par nature (coups d'attente, de défense ou d'attaque), ou par famille de coups. Ces différents critères peuvent bien sûr être cumulés, de façon à obtenir, par exemple, un pourcentage de coups d'attaque réussis en fond de court.

Le dispositif de l'invention est donc un outil d'expertise et de suivi technique intéressant à tous les niveaux, et notamment :

- pour les parents qui veulent devenir des partenaires actifs de leurs enfants, suivre leur progression et pouvoir leur donner des avis et des conseils ;
- pour les moniteurs qui veulent disposer d'un outil pédagogique et faire progresser rapidement les stagiaires et les élèves ;
- pour les pratiquants licenciés et classés du tennis, qui disposent ainsi d'un outil d'analyse de leurs forces et leurs faiblesses, permettant de corriger leurs défauts ;
- pour les professionnels du tennis. Les entraineurs n'ont plus à cocher les coups joués sur papier et à les comptabiliser à la main à longueur de journées pour déterminer des statistiques ;

Le dispositif de l'invention s'adresse donc à tous les pratiquants du tennis, qui se comptent par plusieurs dizaines de millions à travers le monde, et de nombreux autres sports, instaurant un vrai dialogue entre le joueur et l'observateur extérieur.

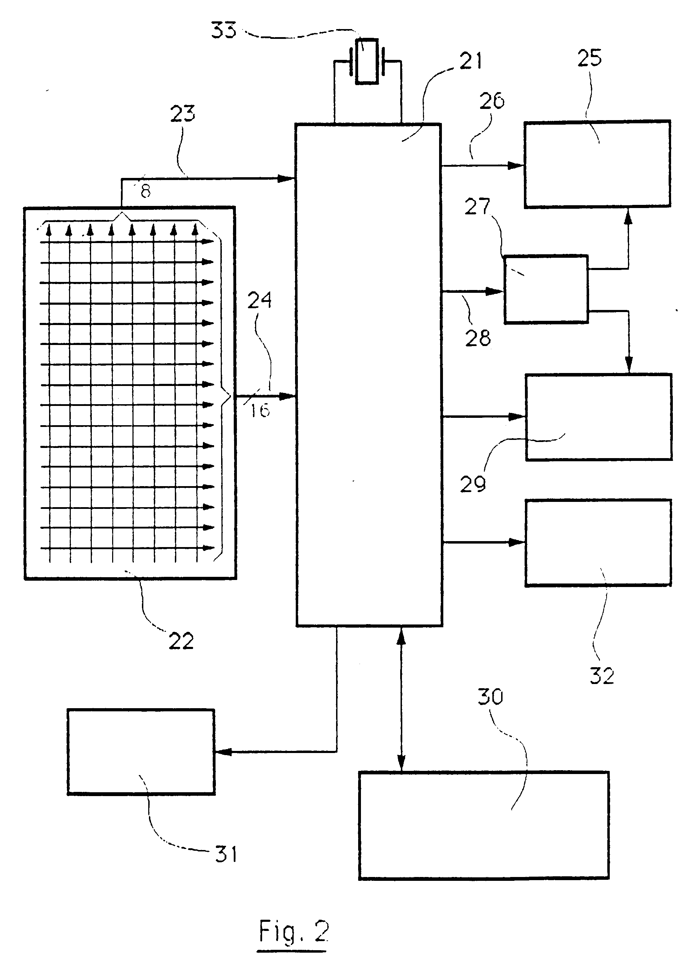

La figure 2 est un schéma synoptique d'un circuit électronique pouvant équiper le dispositif de l'invention, construit autour d'un micro-contrôleur 21.

Il peut notamment s'agir d'un micro-contrôleur HITACHI (marque déposée) H8/330. Il comporte en mémoire morte l'ensemble du programme de gestion du dispositif. Dans le cas du micro-contrôleur sus-mentionné, cette mémoire morte a une taille de 16 koctets. Le programme est donc avantageusement écrit en assembleur, pour en limiter l'encombrement.

De façon préférentielle, le micro-contrôleur 21 traite tous les événements, c'est-à-dire les appuis de touches, en temps réel, en fonctionnant par interruptions.

Le clavier 22 se présente, du point de vue électrique, comme une matrice. Cette matrice, dans le cas du dispositif de la figure 1, comporte 16 lignes et 8 colonnes, ce qui permet de distinguer les 125 touches du clavier de la figure 1 (il est possible de distinguer 16 x 8 = 128 touches).

Un montage particulier permet de fonctionner rapidement et simplement : chacune des colonnes 23 est respectivement reliée à l'une des entrées d'interruption du micro-contrôleur 21. Ainsi, l'appui d'une touche provoque directement une interruption particulière, ce qui permet simultanément de détecter l'appui d'une touche et de connaître la colonne concernée.

On lit ensuite, sur le port de données du micro-contrôleur 21, la valeur 24 de la ligne concernée, de façon à identifier la touche appuyée.

Cette construction s'avère particulilèrement avantageuse, du point de vue du logiciel et de sa rapidité. Il est clair toutefois que d'autres configurations plus classiques, telle que celle consistant à générer un seul type d'interruption clavier, puis à lire la ligne et la colonne concernées, peuvent être utilisées.

A chaque appui d'une touche, une valeur codée correspondant à cette touche est stockée dans une mémoire vive 30, de façon séquentielle. Ces données peuvent être ensuite utilisées pour déterminer les différents calculs statistiques. Plusieurs solutions avantageuses pour le codage et le stockage de ces valeurs codées sont décrites plus loin.

De façon à signaler à l'utilisateur que l'appui de la touche à bien été enregistré, le dispositif de l'invention comprend avantageusement un module 31 d'émission sonore, par exemple un ronfleur, activé par le micro-contrôleur 21 dès qu'une interruption-clavier 23 est détectée.

Le dispositif comporte par ailleurs un afficheur 25, permettant notamment l'affichage des scores et des statistiques. Il peut par exemple s'agir d'un afficheur à cristaux liquides à 16 caractères alphanumériques.

Cet afficheur 25 permet la visualisation des données 26 transmises par le micro-contrôleur 21. Un décodeur 27 est utilisé pour piloter, en fonction des ordres 28 du micro-contrôleur, soit l'afficheur 25, soit une imprimante 29.

L'imprimante 29, utilisable par exemple pour restituer l'ensemble des informations concernant un match, est connectée au dispositif à l'aide d'un connecteur classique, tel qu'un connecteur au standard Centronics (marque déposée).

On peut également prévoir des moyens de connexion du dispositif à un terminal informatique, de façon à pouvoir stocker les données (par exemple sur disque dur), réaliser des calculs statistiques plus complexes et/ou sur une quantité de données supérieure à celle que peut contenir la mémoire vive 30, et permettre une visualisation plus attractive des résultats.

Dans le mode de réalisation décrit en figure 2, on a ainsi prévu des moyens (optionnels) de connexion à un Minitel (marque déposée) 32. Cela permet une restitution des données sur l'écran vidéographique et, le cas échéant, la transmission des données d'un match vers une base de données, via le réseau téléphonique.

Pour assurer la compatibilité avec un tel terminal, on a choisi, pour le micro-contrôleur 21, un quartz 33 de fréquence 4,9152 MHz. Il est clair que tout autre valeur peut également être choisie, dans les limites tolérées par le micro-contrôleur mis en oeuvre. Il est à noter que le dispositif ne gérant en temps réel que le clavier 22, la fréquence retenue est grandement suffisante.

Le dispositif de l'invention étant destiné à être utilisé sur les terrains de sport, et donc notamment en extérieur, il doit être autonome. On a donc prévu une batterie (non représentée) de 6 Volts, permettant l'alimentation du dispositif pendant une durée de quelques heures (supérieure au temps d'un match ou d'un entrainement). Cette batterie assure également avantageusement l'alimentation permanente de la mémoire vive 30, qui est par exemple du type des mémoires C-MOS. Ainsi, il est possible de conserver en mémoire les données correspondant à environ une dizaine de matches. La mémoire 30 a donc, par exemple, une capacité de 32 koctets (on compte environ 3 koctets par matches de tennis).

On peut également prévoir des moyens de connexion avec une alimentation extérieure, de façon à recharger les batteries après usage, et, le cas échéant, à alimenter la prise de connexion au terminal Minitel (marque déposée) 32.

On présente maintenant un mode de fonctionnement logiciel du dispositif de l'invention tel que décrit ci-dessus, du point de vue matériel.

Le programme contenu dans la mémoire morte du micro-contrôleur 21 peut être séparé en deux parties essentielles, correspondant à la phase d'initialisation et à la phase d'enregistrement des données d'un match.

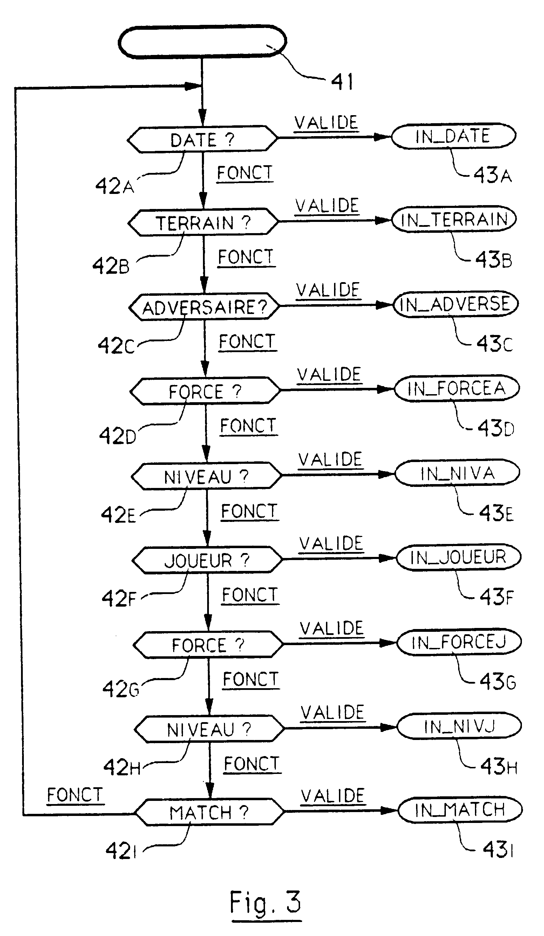

La figure 3 présente l'organigramme correspondant à la phase d'initialisation.

A la mise sous tension 41 du dispositif, celui-ci se positionne automatiquement en phase d'initialisation, et permet l'entrée de données concernant le joueur et son adversaire.

L'afficheur 25 pose automatiquement la première question 42A : "Date ?". L'utilisateur a alors deux possibilités : ou il actionne la touche "VALIDE" $19_D$, et le module logiciel $43_A$ d'entrée de la date ("In-date") est activée, ou il actionne la touche "FONCT" $19_A$ (Fonction) et il passe directement à la question suivante $42_B$ : "Terrain?".

Ainsi de suite, séquentiellement, l'utilisateur a la possibilité de répondre à la question posée (touche "VALIDE") ou de passer directement à la question suivante (touche "FONCT").

La table III suivante résume l'ensemble des questions posées $42_i$ par le dispositif, et le nom et le rôle des modules logiciels $43_i$ correspondants.

## TABLE III

| QUESTION | | MODULE LOGICIEL | |
|---|---|---|---|
| $42_A$ | "Date ?" | $43_A$ | "IN-DATE" : Saisie de la date |
| $42_B$ | "Terrain ?" | $43_B$ | "IN-TERRAIN" : Saisie du type de terrain (surface lente/rapide/dur) |
| $42_C$ | "Adversaire ?" | $43_C$ | "IN-ADVERSE" : Saisie du nom de l'adversaire |
| $42_D$ | "Force ?" | $43_D$ | "IN-FORCEA" : Saisie de la force de l'adversaire (gaucher/droitier) |
| $42_E$ | "Niveau ?" | $43_E$ | "IN-NIVA" : Saisie du niveau de classement de l'adversaire |
| $42_F$ | "Joueur ?" | $43_F$ | "IN-JOUEUR" : Saisie du nom du joueur |
| $42_G$ | "Force ?" | $43_G$ | "IN-FORCEJ" : Saisie de la force du joueur (gaucher/droitier) |
| $42_H$ | "Niveau ?" | $43_H$ | "IN-NIVJ" : Saisie du niveau de classement du joueur |
| $42_I$ | "Match ?" | $43_I$ | "IN-MATCH" : Début du match et du marquage |

Dans chacun des modules $43_A$ à $43_H$, la saisie se fait à l'aide des deux flèches "▲" (haut) et "▼" (bas). Celles-ci permettent de faire défiler à l'écran l'ensemble des options de saisie autorisées. La sélection se fait à l'aide de la touche de validation "VALIDE". Dans le cas du nom des joueurs, les lettres sont entrées une à une, avec un maximum de 16 lettres. Chaque appui sur "VALIDE" entraine la saisie de la lettre suivante. La touche "FONCT" permet de passer à l'étape suivante.

A la fin de la phase d'initialisation, le dispositif pose la question $42_I$ "Match?". Un appui sur la touche "VALIDE" entraine le passage en phase d'enregistrement du match. En cas d'erreur de saisie, il est possible de relancer (44) une nouvelle phase d'initialisation, à l'aide de la touche "FONCT".

Lors du début d'un match, il est nécessaire de préciser quel est le joueur qui sert en premier, et sur quel côté du terrain. Cela se fait par appui sur la touche "S" (service) dans la moitié de terrain correspondante, précédé de l'appui sur la touche "ADV" (adversaire), si c'est l'adversaire qui est au service.

Ensuite, le dispositif gère automatiquement les changements de côtés et les services, de même que l'évolution du score.

Chaque échange, ou plus précisément, la phase finale de chaque échange, est enregistré. Pour cela, le dispositif gère deux piles de données distinctes. Une première pile intermédiaire permet le stockage provisoire de l'échange en cours, ou du dernier échange. Seize coups successifs peuvent ainsi être mémorisés. L'appui sur l'une des bornes $16_A \oplus$ ou $16_B \ominus$ (correspondant à la fin de l'échange) entraine l'enregistrement des trois derniers coups précédant la fin de l'échange dans une pile correspondant à l'enregistrement séquentiel du match. On se limite aux trois derniers coups (plus l'indication de succès ou d'échec du point), parmi les seize possibles, car il apparaît qu'ils sont le plus souvent les seuls significatifs. Enregistrer les seize coups mémorisés dans la pile intermédiaire entrainerait donc une occupation inutile de l'espace mémoire. Dans certains cas, on peut cependant prévoir d'enregistrer plus de trois coups. Inversement, on peut également choisir de limiter à un ou deux les coups mémorisés, en fonction du type de calculs statistiques que l'on souhaite réaliser.

En cas de mauvaise manipulation, et d'entrée d'une fausse donnée, il est possible d'effacer l'ensemble du contenu de la pile intermédiaire, à l'aide de la touche $19_E$ "EFFACE", et de réentrer la séquence exacte.

Avantageusement, l'enregistrement séquentiel des données se fait dans deux piles distinctes, correspondant à chacun des joueurs. Ainsi, on adopte un codage logique, et non plus physique, des touches : chaque fois qu'une touche appuyée correspond à une action effectuée par l'adversaire, une valeur de décalage (par exemple 60) est ajoutée systématiquement à la valeur de code de la touche. Lors de l'élaboration des statistiques, il est alors très aisé de distinguer les coups effectués par le joueur de ceux effectués par l'adversaire, sans retraitement ni analyse séquentielle d'une série de données.

Par ailleurs, les valeurs de codes affectées à chacune des touches sont avantageusement choisies de façon que l'analyse par famille, par nature et/ou par espace des coups soit facilitée. Ainsi, par exemple, on fera en sorte que tous les coups d'attaque, ou toutes les volées, aient un ou plusieurs bits caractéristiques identiques. La comptabilisation de ces coups est alors extrêmement simple et rapide, par balayage direct de la pile des coups enregistrés.

De nombreux calculs statistiques sont envisageables. Parmi les plus simples, on peut prévoir le comptage, les calculs de fréquence, les calculs de taux de réussite, l'analyse de l'évolution en cours de match...Il est possible de considérer les coups par types, espaces géographiques, natures, familles,... On peut également prendre en compte les coups gagnants ou perdants, ayant entrainés le gain ou la perte du point. On prévoit également la consolidation des statistiques en prenant en compte plusieurs matches, par exemple en considérant différents types de surfaces de jeu.

On peut également prévoir d'adjoindre au dispositif de l'invention des moyens de chronométrage, permettant notamment d'enregistrer la durée des échanges, par exemple par appui sur une touche pendant toute la durée d'un échange.

Il est alors possible de calculer des temps cumulés, correspondant aux durées des jeux, des manches et des matches, et de déterminer plusieurs calculs statistiques sur ces durées, éventuellement en combinaison avec les autres informations mémorisées.

Les données mémorisées dans la pile d'enregistrement permettent de constituer une base de données. Outre la réalisation des calculs mentionnés ci-dessus, cette base de données peut être utilisée de diverses façons. Elle peut par exemple être transmise, via un modem, à un centre serveur chargé de suivre et de mettre à jour le classement des joueurs.

Elle peut également être réutilisée pour une analyse plus fine d'un match. Couplée à des moyens de visualisation, elle peut permettre la reproduction du match, sur écran, à l'aide d'images simulées informatiquement.

Elle peut encore être connectée à une base de données de conseils personnalisés en fonction des résultats du match. Ainsi, par exemple, le dispositif de l'invention peut être connecté à un lecteur de disque optique interactif, sélectionnant les séquences adéquates selon les statistiques produites par le dispositif.

De nombreuses autres applications de l'invention apparaîtront aisément à l'homme du métier.

De même, de nombreux modes de réalisation différents de celui décrit peuvent être envisagés sans sortir du cadre de l'invention, en particulier en adaptant le dispositif à d'autres sports.

On peut par exemple prévoir, pour le golf ou pour un dispositif multisport, la possibilité de modifier la répartition des touches sur le clavier. Dans ce cas, une feuille ou une planchette amovible est placée sur le plateau du dispositif, le clavier est constitué d'une matrice classique, et l'affectation d'un code aux touches est fonction de la feuille choisie. La sélection du rôle des touches peut être automatique, par reconnaissance de la planchette sélectionnée, manuelle, ou par enfichage d'une cartouche particulière, contenant en mémoire morte les informations nécessaires à l'identification des touches et le programme de gestion correspondant.

Dans le cas d'un dispositif multisport, chaque planchette amovible peut présenter le terrain correspondant aux différents sports. Pour le golf, le dispositif sera ainsi aisément adaptable aux particularités des différents parcours.

Un tel système peut également être utilisé dans un même sport. Ainsi, dans le cas du tennis, on peut prévoir, outre la planchette telle que décrite en relation avec la figure 1, un jeu de planchettes spécialisées, représentant par exemple :
- les impacts au sol (précision et longueur) ;
- le court de profil (de façon à noter la hauteur, la longueur et les effets des balles) ;
- la représentation de zones géographiques plus détaillées dans chacun des espaces du terrain.

Une planchette spécialisée pour le choix des raquettes et/ou des cordages peut également être prévue.

Le jeu de planchettes amovibles peut être remplacé par un écran plat, à cristaux liquides ou autre, recouvert d'un clavier transparent programmable. Le dispositif est alors très aisément adaptable et évolutif, par simple programmation. Un tel dispositif s'avère particulièrement intéressant, notamment dans le cas du golf. On peut ainsi prévoir que chaque club mette à la disposition des joueurs un module de programmation, ou des moyens de chargement d'un programme, permettant d'adapter le dispositif au parcours.

On notera par ailleurs que le dispositif de l'invention peut délivrer directement des informations statistiques sur un joueur, ou une équipe, mais également sur son adversaire. Cette caractéristique est très importante, et nouvelle par rapport aux techniques classiques, basées par exemple sur le pointage sur fiches papier, qui ne permettent de suivre qu'un seul joueur. A l'aide de l'invention, un seul enregistrement permet de surveiller l'évolution des deux adversaires.


**Revendications**

1. Dispositif d'enregistrement de phases de jeu sportif constituées d'actions successives menées sur un espace de jeu, comprenant un clavier tactile (11) représentatif dudit espace de jeu (12), muni de touches (15, 16$_A$, 16$_B$) définissant des actions de jeu, au moins certaines desdites touches (15, 16$_A$, 16$_B$) étant localisées en des emplacements dudit clavier tactile (11) correspondant à des zones dudit espace de jeu où ces actions de jeu sont susceptibles d'intervenir, de façon à permettre l'enregistrement de la représentation codée d'une phase de jeu en pressant la touche ou la séquence de touches correspondant aux actions caractéristiques de ladite phase de jeu, dans au moins un desdits emplacements dudit clavier tactile (11) correspondant à la ou aux zones dudit espace de jeu où chacune desdites actions est intervenue.

2. Dispositif selon la revendication 1, caractérisé en ce que ledit clavier tactile (11) représente un terrain de tennis (12), et ce que lesdites phases de jeu sont des échanges de balles, et notamment les phases finales de chaque échange.

3. Dispositif selon l'une quelconque des revendications 1 et 2, caractérisé en ce que ledit clavier tactile (11) représente une portion dudit espace de jeu, et notamment un quart ou une moitié dudit espace de jeu.

4. Dispositif selon l'une quelconque des revendications 1 à 3, caractérisé en ce que lesdites touches localisées (15, 16A, 16B) dans des zones dudit espace de jeu sont distribuées symétriquement sur ledit clavier tactile (11), en fonction d'au moins un axe de symétrie dudit espace de jeu.

5. Dispositif selon l'une quelconque des revendications 1 à 4, caractérisé en ce que lesdites touches (15, 16$_A$, 16$_B$) comprennent des touches (15) d'actions de jeu, correspondant chacune à un type de coup, ou de geste, dudit sport, effectué dans une desdites zones dudit espace de jeu, et des bornes (16$_A$, 16$_B$) d'indication d'un point gagnant ou perdant correspondant à un impact dans une desdites zones dudit espace de jeu.

6. Dispositif selon l'une quelconque des revendications 1 à 5, caractérisé en ce qu'il comprend, en marge de la représentation (12) dudit espace de jeu, au moins une des touches appartenant au groupe comprenant :
- touches de validation (19$_D$), d'effacement (19$_E$), de correction ;
- touches (19$_H$) de commentaire et/ou d'observation sur lesdites phases de jeu et/ou les joueurs ;
- touches (19$_A$) d'initialisation et d'entrée de données de base d'une partie;
- touches alpha-numériques.

7. Dispositif selon l'une quelconque des revendications 1 à 6, caractérisé en ce qu'il comprend des moyens (21) de traitement desdites représentations codées desdites phases de jeu, de façon à déterminer le score de la partie et/ou des informations statistiques sur le déroulement de ladite partie.

8. Dispositif selon la revendication 7, caractérisé en ce qu'il comprend des moyens d'affichage (14) dudit score et/ou desdites informations statistiques.

9. Dispositif selon l'une quelconque des revendications 1 à 8, caractérisé en ce qu'il comprend des moyens de connexion à l'un au moins des dispositifs appartenant au groupe comprenant :
   - une imprimante (29) ;
   - des moyens de stockage des données ;
   - des moyens de traitement des données ;
   - des moyens (32) de restitution des données ;
   - une base de données.

10. Dispositif selon l'une des revendications 1 à 9, caractérisé en ce que ledit clavier tactile (11) comprend un clavier transparent programmable recouvrant un écran plat, par exemple à cristaux liquides.

11. Dispositif selon l'une quelconque des revendications 1 à 10, caractérisé en ce que ledit clavier tactile représente au moins une portion d'un des espaces de jeu appartenant au groupe comprenant :
   - un terrain de tennis ;
   - un terrain de volley-ball ;
   - un terrain de basket-ball ;
   - un terrain de squash ;
   - un parcours de golf ;
   - une représentation d'au moins un adversaire dans le cas d'un sport de combat.

12. Dispositif selon l'une quelconque des revendications 1 à 11, caractérisé en ce que la touche ou la séquence de touches correspondant aux actions caractéristiques de la phase de jeu est pressée à l'aide du doigt, d'un crayon ou de tout autre objet adéquat.

13. Dispositif selon l'une quelconque des revendications 1 à 12, caractérisé en ce qu'il comprend une base de données qu'il a générée.

14. Appareil de stockage, de traitement, de restitution et/ou d'assistance didactique à des joueurs comprenant une base de données générée par un dispositif selon l'une quelconque des revendications 1 à 13.

## Patentansprüche

1. Vorrichtung zum Aufzeichnen der Phasen eines Spiels, das sich aus aufeinanderfolgenden Handlungen auf einem Spielfeld zusammensetzt, die ein Berührungstastenfeld (11) aufweist, welches das Spielfeld (12) repräsentiert, ausgestattet mit die Spielhandlungen definierenden Tasten (15, 16$_A$, 16$_B$), wobei mindestens einige der Tasten (15, 16$_A$, 16$_B$) in den Bereichen des Berührungstastenfeldes (11) plaziert sind, die den Zonen des Spielfeldes entsprechen, wo die Spielhandlungen wahrscheinlich erfolgen, um das Aufzeichnen einer verschlüsselten Darstellung einer Spielphase durch Drücken einer oder einer Folge von den charakteristischen Handlungen der betreffenden Spielphase entsprechenden Tasten zu ermöglichen, und wobei zumindest einer der Bereiche des Berührungstastenfeldes der oder den Zonen des Spielfeldes entspricht, wo die einzelnen Handlungen erfolgen.

2. Vorrichtung nach Anspruch 1, dadurch gekennzeichnet, daß das Berührungstastenfeld (11) einen Tennisplatz (12) darstellt, und daß die Spielphasen Ballwechsel sind, insbesondere die Endphasen der Ballwechsel.

3. Vorrichtung nach Anspruch 1 oder 2, dadurch gekennzeichnet, daß das Berührungstastenfeld (11) einen Teil, namentlich ein Viertel oder eine Hälfte des Spielfeldes darstellt.

4. Vorrichtung nach einem der Ansprüche 1 bis 3, dadurch gekennzeichnet, daß die in den Zonen des Spielfeldes plazierten Tasten (15, 16$_A$, 16$_B$) gemäß mindestens einer Symmetrielinie des Spielfeldes symmetrisch auf dem Berührungstastenfeld (11) verteilt sind.

5. Vorrichtung nach einem der Ansprüche 1 bis 4, dadurch gekennzeichnet, daß die Tasten (15, 16$_A$, 16$_B$) Handlungs-Tasten (15), die jede einer, in der Zone des Spielfeldes ausgeführten Art von Schlag oder Geste, je nach Sportart, entsprechen und Zähl-Tasten (16$_A$, 16$_B$) zum Eingeben eines gewonnenen oder verlorenen Punktes, entsprechend dem Auftreffen [des Balls] in einer der Zonen des Spielfeldes

12

sind.

6. Vorrichtung nach einem der Ansprüche 1 bis 5, dadurch gekennzeichnet, daß sie am Rand der Darstellung (12) des Spielfeldes zumindest eine der in der folgenden Gruppe erscheinenden Tasten aufweist:
   - Tasten zum Auswerten (19$_D$), Löschen (19$_E$) oder Korrigieren;
   - Tasten (19$_H$) zum Kommentieren und/oder Beobachten der Spielphasen und/oder der Spieler;
   - Tasten (19$_A$) zum Initialisieren und zum Eingeben eines Anfangsstandes einer Partie;
   - Alpha-numerische Tasten.

7. Vorrichtung nach einem der Ansprüche 1 bis 6, dadurch gekennzeichnet, daß sie Mittel zum Bearbeiten der verschlüsselten Darstellung der Spielphasen aufweist, der Art, daß sie das Endergebnis der Partie und/oder statistische Informationen über den Ablauf der Partie bestimmen.

8. Vorrichtung nach Anspruch 7, dadurch gekennzeichnet, daß sie Mittel zum Anzeigen (14) des Endergebnisses oder der statistischen Informationen aufweist.

9. Vorrichtung nach einem der Ansprüche 1 bis 8, dadurch gekennzeichnet, daß sie Mittel zum Verbinden mit mindestens einer der in der folgenden Gruppe erscheinenden Vorrichtungen aufweist:
   - ein Drucker (29);
   - Mittel zum Speichern der Daten;
   - Mittel zum Bearbeiten der Daten;
   - Mittel (32) zum Wiedergeben der Daten;
   - eine Datenbank;

10. Vorrichtung nach einem der Ansprüche 1 bis 9, dadurch gekennzeichnet daß das Berührungstastenfeld (11) eine durchsichtige, programmierbare, von einem flachen Schutzschirm bedeckte Tastatur aufweist, die z.B. Flüssigkristalle enthält.

11. Vorrichtung nach einem der Ansprüche 1 bis 10, dadurch gekennzeichnet, daß das Berührungstastenfeld mindestens einen Teil eines der im Folgenden aufgeführten Spielfelder darstellt:
   - einen Tennisplatz;
   - ein Volleyballfeld;
   - ein Basketballfeld;
   - einen Squashplatz;
   - einen Golfkurs;
   - eine Darstellung mindestens eines Gegners im Falle einer Kampfsportart.

12. Vorrichtung nach einem der Ansprüche 1 bis 11, dadurch gekennzeichnet, daß die Taste oder die Folge von Tasten, welche den charakteristischen Handlungen der Spielphase entsprechen, mit Hilfe eine Fingers, eines Stiftes oder jedes anderen geeigneten Objektes gedrückt werden.

13. Vorrichtung nach einem der Ansprüche 1 bis 12, dadurch gekennzeichnet, daß sie eine Datenbank mit den von ihr erzeugten Daten aufweist.

14. Gerät zum Speichern, Bearbeiten, Wiedergeben und/oder didaktischem Helfen der Spieler, das eine Datenbank mit den von der Vorrichtung nach einem der Ansprüche 1 bis 13 erzeugten Daten enthält.


**Claims**

1. Device for the recording of stages of play in a sport constituted by successive actions performed in a play area, comprising a touch-sensitive keyboard (11) representing said play area (12), provided with keys (15, 16$_A$, 16$_B$) defining actions of play, at least certain of said keys (15, 16$_A$, 16$_B$) being localized in locations of said touch-sensitive keyboard (11) corresponding to zones of said play area where these actions of play are likely to occur, so as to enable the recording of the coded representation of a stage of play by the pressing of the key or of the sequence of keys corresponding to the actions characteristic of said stage of play, in at least one of said locations of said touch-sensitive keyboard (11) corresponding to the zone or zones of said play area where each of said actions has occurred.

2. Device according to Claim 1, characterized in that said touch-sensitive keyboard (11) represents a tennis court (12), and in that said stages of play are exchanges of shots, and notably the final stages of each exchange.

3. Device according to either of Claims 1 and 2, characterized in that said touch-sensitive keyboard (11) represents a portion of said play area, and notably a quarter or half of said play area.

4. Device according to any one of Claims 1 to 3, characterized in that said keys (15, 15A, 16B) localized in zones of said play area are distributed symmetrically on said touch-sensitive keyboard (11), as a function of at least one axis of symmetry of said play area.

5. Device according to any one of Claims 1 to 4, characterized in that said keys (15, $16_A$, $16_B$) comprise keys (15) relating to actions of play, each corresponding to a type of shot or stroke of said sport performed in one of said zones of said play area, and markers ($16_A$, $16_B$) indicating a point won or a point lost corresponding to an impact in one of said zones of said play area.

6. Device according to any one of Claims 1 to 5, characterized in that it comprises, on the margin of the representation (12) of said play area, at least one of the keys belonging to the group comprising:
   - validation ($19_D$), erasure ($19_E$), correction keys;
   - keys ($19_H$) for comments and/or remarks on said stages of play and/or the players;
   - keys ($19_A$) for initialization and for the input of basic data on a contest;
   - alpha-numeric keys.

7. Device according to any one of Claims 1 to 6, characterized in that it comprises means (21) for the processing of said coded representations of said stages of play so as to determine the score of the contest and/or statistical information on the progress of said contest.

8. Device according to Claim 7, characterized in that it comprises means (14) for the display of said score and/or said statistical information.

9. Device according to any one of Claims 1 to 8, characterized in that it comprises means for connection to at least one of the devices belonging to the group comprising:
   - a printer (29);
   - data storage means;
   - data processing means;
   - data retrieval means (32);
   - a data base.

10. Device according to one of Claims 1 to 9, characterized in that the said touch-sensitive keyboard (11) comprises a programmable transparent keyboard covering a flat screen, for example a liquid-crystal screen.

11. Device according to any one of Claims 1 to 10, characterized in that the said touch-sensitive keyboard represents at least one portion of one of the play areas belonging to the group comprising:
   - a tennis court;
   - a volleyball court;
   - a basketball court;
   - a squash court;
   - a golf course;
   - a representation of at least one opponent in the case of a combat sport.

12. Device according to any one of Claims 1 to 11, characterized in that the key or sequence of keys corresponding to the actions characteristic of the stage of play is pressed with the aid of the finger, a pencil or any other suitable object.

13. Device according to any one of Claims 1 to 12, characterized in that it comprises a data base which it has generated.

14. Apparatus for storage, processing, retrieval and/or didactic assistance to players comprising a data base generated by a device according to any one of Claims 1 to 13.

13

14

17A

16B

12

16A

LOB LOB

R PASS FDC R S R FDC PASS R

RV AM AFDC RV SV RV AFDC AM RV

MC 15 MC

LOB ATMC ATMC LOB

PASS AM 1V 1V AM PASS

17B

SM SM

ATF V V ATF

PASS CAM DV DV CAM PASS

17C

19A

FONCT

19B

▲

19C

▼

VALIDE

19D

EFFACE

19E

ADVERS

19F

TBREAK

19G

DECALE

STAT.

19H

19I

PASS CAM DV DV CAM PASS

ATF V V ATF

SM SM

PASS AM 1V 1V AM PASS

LOB ATMC ATMC LOB

MC MC

RV AM AFDC RV SV RV AFDC AM RV

R PASS FDC R S R FDC PASS R

LOB LOB

Fig. 1

11

18A 18B

Fig. 2

Fig. 3